# EUROPEAN PATENT APPLICATION

(11) **EP 2 134 123 A1**
(43) Date of publication of application: **16.12.2009**
(21) Application number: 08157849.4
(22) Date of filing: 09.06.2008
(51) Int. Cl.: H04W 48/16

(54) **Method and system and device for IF/IRAT measurement allocation**

(71) Applicant: Telefonaktiebolaget LM Ericsson (publ), 164 83 Stockholm (SE)
(72) Inventor: Lindoff, Bengt, 237 36, Bjärred (SE); Palenius, Torgny, 246 57, Barsebäck (SE)
(74) Representative: Boesen, Johnny Peder

(57) **Abstract**

The current invention relates to a method of searching and/or measuring on cells in a mobile communication device connected to a first cell in a network, the method comprising receiving a number of data-frames and a plurality of idle frames which can be used for cell search and/or measurement and wherein the plurality of idle frames intervenes the number of data-frames; receiving information regarding at least one further cell in said network; and based on the received information, determining for each of the at least one further cell a first part of at least one of said idle frames to search and/or measure on said at least one further cell.

Further, the invention further relates to a device and a system.

## Description

### Technical Field of the Invention

The invention relates to a method of searching and/or measuring on cells in a mobile communication device connected to a first cell in a network. Further, the invention relates to a corresponding system and device.

### Background

A mobile communication device, such as e.g. a mobile telephone, can move around in a network comprising a number of cellular systems of various Radio Access Technology (RAT) such as, for example, a Global System for Mobile communications (GSM) cellular system and/or a 3G Long Term Evolution (LTE) cellular system and/or a Wideband Code Division Multiple Access (WCDMA) cellular system.

The mobile communication device may, for example, be connected to a first cell at a first frequency f0 in the first cellular (RAT) system, said first cell being the cell e.g. closest to the mobile communication device at a first time instant when the mobile communication device is positioned at a first position in the first cellular system. The first cell may provide coverage at the first position of the mobile communication device.

During movement of the mobile communication device and in order to, for example, ensure handover functionality of the mobile communication device from the first cell to another cell, the mobile communication device may search for and measure other cells. The other cells may, for example, be in the same cellular system (RAT) as the first cell. Alternatively or additionally, the other cells may be in one or more other cellular systems (RATS) than the first cell.

The search for and measurement of other cells may be performed by the mobile communication device using, for example, intra-frequency cell search and measurement in which the mobile communication device may search for and measure other cells in the first cellular system (e.g. LTE) using said first frequency f0.

Alternatively or additionally, the mobile communication device may use Inter-Frequency (IF) cell search and measurement in order to search for and measure other cells in the first cellular system (e.g. LTE) using a second frequency f1.

Alternatively or additionally, the mobile communication device may use Inter Radio Access Technology (IRAT) cell search and measurement in order to search for and measure other cells in other cellular systems (e.g. GSM and/or WCDMA) using a third frequency f2 (e.g. WCDMA) and/or a fourth frequency f3 (e.g. GSM).

The intra-frequency cell search and measurement may be performed on the same frequency f0 as data to the mobile communication from the first cell is transmitted on and therefore, intra-frequency cell search and measurement may be performed simultaneously with reception of data from the first cell using the first frequency f0.

In order to perform IF and/or IRAT cell search and measurement, the network may create IF and/or IRAT gaps in a data stream transmitted to the mobile communication device e.g. via the first cell, during which gaps the mobile communication device may perform IF and/or IRAT cell search and measurement.

In WCDMA, for example, each cellular system (e.g. GSM or WCDMA) may have their own gaps and gap length i.e. a first gap containing a first gap length for GSM cell search and measurement and a second gap containing a second gap length for WCDMA cell search and measurement.

Motorola "E-UTRAN Measurement Gap Control for Inter-Frequency and Inter-RAT Handover", 3rd generation partnership project (3GPP), Vol. R2 - 72012, pages 1 to 6, May 5, 2007, discloses that handover related measurements should be taken on neighbour cells of candidate frequency layers/RATS to support inter-frequency and inter-RAT mobility in E-UTRAN.

It would, however, be advantageous to be able to, for example, reduce power consumption of a mobile communication device, such as for example a mobile telephone, during e.g. handover from a first cell to another cell in the network.

Alternatively or additionally, it would be advantageous to be able to, for example, reduce cell search and measurement time in a mobile communication device, such as for example a mobile telephone, during e.g. handover from a first cell to another cell in the network.

### Summary

The above and other advantages are obtained by a method of searching and/or measuring on cells in a mobile communication device connected to a first cell in a network, the method comprising receiving a number of data-frames and a plurality of idle frames which can be used for cell search and/or measurement and wherein the plurality of idle frames intervenes the number of data-frames; receiving information regarding at least one further cell in said network; and based on the received information, determining for each of the at least one further cell a first part of at least one of said idle frames to search and/or measure on said at least one further cell.

Thereby, the invention is able to allocate at least a part of an idle frame for search and/or measurement of the at least one further cell. By allocating a part of an idle frame to search and measurement, the invention is able to, for example, perform more than one search and measurement in one idle frame or a search and measurement and DRX in one idle frame if at least one cell requires a proper subset of an idle frame for search and measurement. Further, by basing the allocation on the received information, the invention is able to allocate idle frames or part thereof according to the requirements of the at least one further cell.

In an embodiment, the method further comprises classifying said at least one further cell into a first group comprising at least one first group requirement being correlated to said information.

Thereby, the invention is able to create an overview on a number of cells based on a common requirement of the cells in a given group.

In an embodiment, the method further comprises measuring at least one property of the at least one further cell; determining, based on said at least one property, if said at least one further cell requires a re-classification; and for each of the at least one further cells requiring a reclassification: Re-classifying said at least one further cell into a second group based on said at least one property, wherein said second group comprises at least one second group requirement being correlated to said at least one property; and based on the re-classification, determining for each of the at least one further cell a second part of at least one of said idle frames to search and/or measure on said at least one further cell.

Thereby, the invention is able to re-classify the at least one further cell according to, for example, a property determined. For example, a property may be a BSIC or a TDD cell timing. By re-classifying the at least one further cell according to the determined property, the invention is able to maintain an updated list of cell requirements. Further, by allocating a part of the at least one idle frame according to the re-classification, the invention is able to, among other things, allocate idle frames or part thereof according to the actual requirements of the at least one further cell and further, the invention may allocate more than one further cell requiring a proper subset of an idle frame per idle frame.

In an embodiment, the classifying said at least one further cell into a first group further comprises determining a period (M) of the plurality of idle frames.

Thereby, the invention may, for example, handle cells requiring a periodicity in, for example, searching and measuring e.g. GSM cells.

In an embodiment, the first part is determined periodically with the period (M).

Thereby, the invention may, for example, accommodate the periodic BSIC search requirements of, for example, GSM cellular systems.

In an embodiment, the method further comprises repeating the measuring and the re-classifying and the determining for each of the at least one further cell until the mobile communication device is handed over to one of the at least one further cell.

Thereby, the invention is able to ensure optimal usage of the idle frames from the time when IF/IRAT measurements are triggered by e.g. the mobile communication device and until the mobile communication device is handed over from the first cell to another cell.

In an embodiment, the mobile communication device is adapted to power down during a third part of the idle frames being equal to the complement to a union of said first and second parts of the idle frames.

Thereby, the invention is able to power down during idle frames which are not allocated to a search and/or measurement of cells requiring an entire idle frame and which are not allocated to a search and/or measurement of cells requiring an proper subset of an idle frame.

In an embodiment, said first group requirement is different from said second group requirement.

Thereby, the invention may re-classify e.g. a GSM cell from a group in which the GSM cell requires periodic search to a group in which the GSM cell requires a subset of an idle frame e.g. after a property of the GSM cell has been determined.

In an embodiment, the first and/or the second group requirements are chosen from a cell requiring an entire idle frame and a specific period (M) of the plurality of idle frames; a cell requiring an entire idle frame; a cell requiring a subset of an idle frame and a specific timing within the idle frame; or a cell requiring a subset of an idle frame.

Thereby, the invention is able to classify GSM cells before BSIC is determined, WCDMA and LTE cells before a timing has been determined, LTE cells after a TDD timing has been determined, and GSM cells after BSIC has been determined.

As mentioned, the invention also relates to a device for searching and/or measuring on cells in a mobile communication device connected to a first cell in a network, the device comprising a receiver for receiving a number of data-frames and a plurality of idle frames which can be used for cell search and/or measurement and wherein the plurality of idle frames intervenes the number of data-frames; and for receiving information regarding at least one further cell in said network; and a control unit for, based on the received information, determining for each of the at least one further cell a first part of at least one of said idle frames to search and/or measure on said at least one further cell.

The device and embodiments thereof correspond to the method and embodiments thereof and have the same advantages for the same reasons.

Embodiments of the present invention also relates to a system for handing over a mobile communication device from a first cell to another cell, wherein the system comprises a device according to an embodiment of the invention and a first cell and another cell.

The system and embodiments thereof correspond to the device and embodiments thereof and have the same advantages for the same reasons.

### Brief description of the drawings

The invention will now be described more fully below with reference to the drawings, in which
Figure 1 shows a mobile communication device in a network comprising a number of cellular systems.
Figure 2 shows an embodiment in which a mobile communication device moves in the network and thereby may trigger IF/IRAT cell search and measurement.
Figure 3 shows a flowchart of an embodiment of a method of searching and/or measuring on cells in a mobile communication device connected to a first cell in a network.
Figure 4 shows a flowchart of an embodiment of a method of searching and/or measuring on cells in a mobile communication device connected to a first cell in a network.
Figure 5 shows a flowchart of an embodiment of a method of performing IF/IRAT search and measurements on LTE TDD or synchronized LTE FDD cellular systems.
Figure 6 shows a flowchart of an embodiment of a method of performing IF/IRAT search and measurements on GSM cellular systems.
Figure 7 shows a device according to an embodiment.

### Detailed description

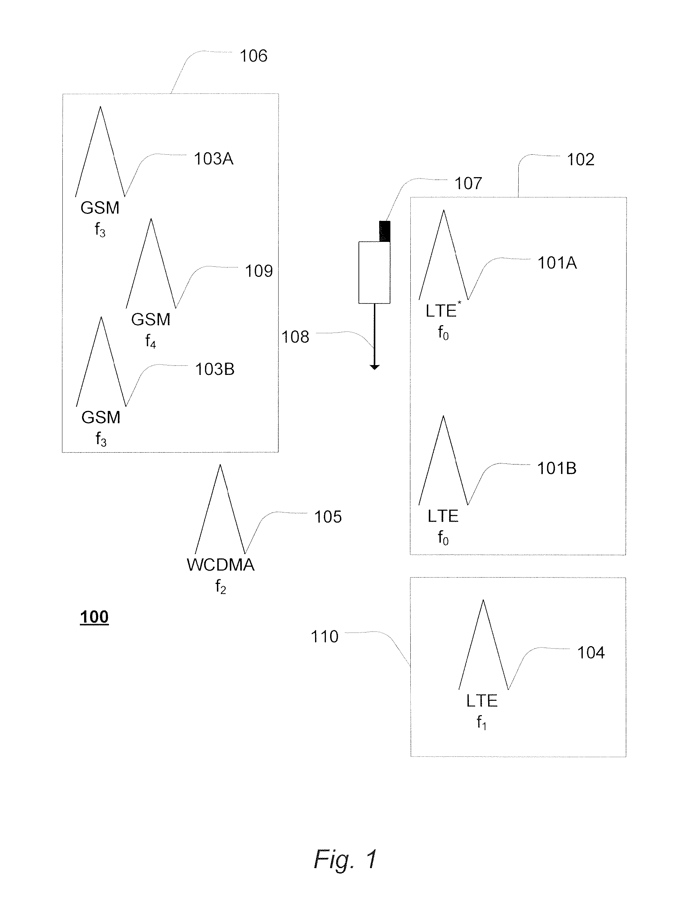

Figure 1 shows a mobile communication device 107, such as e.g. a mobile telephone, in a network 100 comprising a number of cellular systems 102, 105, 106, 110. Each of the cellular systems in the number of cellular systems may be a type of Radio Access Technology such as, for example, a Global System for Mobile communications (GSM) cellular system 106 and/or a 3G Long Term Evolution (LTE) cellular system 102, 110 and/or a Wideband Code Division Multiple Access (WCDMA) cellular system 105. Each of the number of cellular systems 102, 105, 106, 110 may comprise one or more cells 101A, 101B, 103A, 103B, 104, 105, 109.

The mobile communication device 107 may, for example, be connected to a first cell 101A operating at a first frequency f0 in the first cellular system 102, said first cell 101A being e.g. the cell closest to the mobile communication device at a first time instant, when the mobile communication device 107 is positioned at a first position in the network 100. The first cell 101A may provide coverage at the first position of the mobile communication device 107.

During movement 108 of the mobile communication device 107 and in order to, for example, ensure handover functionality of the mobile communication device 107 from the first cell 101A to another cell 101B, 103A, 103B, 104, 105, 109, the mobile communication device 107 may indicate to the network 100 that IF/IRAT measurements are required i.e. that the mobile communication device 107 needs to search for and measure the other cells 101B, 103A, 103B, 104, 105, 109. The indication by the mobile communication device 107 to the network 100 may, for example, be made when the mobile communication device 107 signal strength on the first cell 101A is below a certain threshold and no stronger intra-frequency cells exist i.e. indicating that the mobile communication device 107 is going out of coverage of the first cellular system 102. Received signal strength for the first cell may, for example, be in the order of -85dBm to -90dBm. These values may, for example, be valid for LTE cellular systems.

The search for and measurement of other cells 101 B, 103A, 103B, 104, 105, 109 may be performed by the mobile communication device 107 using, for example, intra-frequency cell search and measurement in which the mobile communication device 107 may search for and measure other cells 101 B in the first cellular system 102 (e.g. LTE) using said first frequency f0.

Alternatively or additionally, the mobile communication device 107 may use Inter-Frequency (IF) cell search and measurement in order to search for and measure other LTE cells 104 using a second frequency f1.

Alternatively or additionally, the mobile communication device 107 may use Inter Radio Access Technology (IRAT) cell search and measurement in order to search for and measure other cells 103A, 103B, 105, 109 in other cellular systems 105, 106 (e.g. GSM and/or WCDMA) using a third frequency f2 at which for example a second cellular system operates 105 (e.g. WCDMA) and/or a fourth f3 frequency at which for example a third cellular system 106 operates (e.g. GSM).

The intra-frequency cell search and measurement may be performed on the same frequency f0 as data to the mobile communication 107 from the first cell 101A is transmitted on and therefore, intra-frequency cell search and measurement may be performed simultaneously with reception of data by the mobile communication device 107 from the first cell 101A using the first frequency f0.

In order to perform IF and/or IRAT cell search and measurement, the network 100 may create IF and/or IRAT gaps (idle frames) in e.g. a data stream transmitted to the mobile communication device for example via the first cell 101A, during which gaps the mobile communication device 107 may perform IF and/or IRAT cell search and measurement.

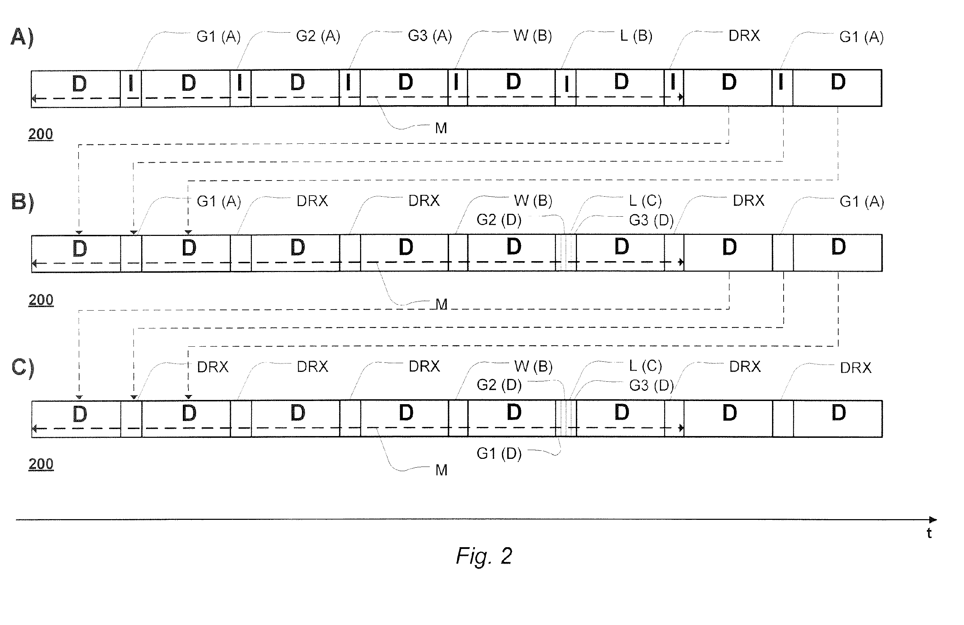

Figure 2 shows an example of gap pattern and a number of other cells to be searched for and/or measured on by a mobile communication device 107 moving in a network whereby the mobile communication device 107 may trigger IF/IRAT cell search and measurement.

The mobile communication device 107 may, for example, be connected to a first LTE cell 101A (or a first GSM cell 103A or a first WCDMA cell 105, etc.) of figure 1.

For example, the IF/IRAT cell search and measurement may be triggered when the mobile communication device 107 signal strength on the first cell 101A is below a certain threshold and no stronger intra-frequency cells exist i.e. indicating that the mobile communication device 107 is going out of coverage of the first cellular system 102.

If IF/IRAT cell search and measurement are triggered by the mobile communication device 107, then the network 100 may transmit a list of cellular systems in proximity, e.g. within a 0.5km - 5km radius of the mobile communication device, to the mobile communication device 107, on which cellular systems the mobile communication device 107 may perform signal strength measurements on. The list may, for example, be transmitted to the mobile communication device 107 from the network 100 via the first LTE cell 101A. The list may, for example, comprise carrier frequencies and RAT of potential neighbouring cellular systems 105, 106, 110.

For example, as illustrated in figure 2 A), the network may transmit a list comprising a first G1 and a second G2 and a third G3 GSM cellular systems and a first WCDMA W cellular system and a second LTE cellular system L, which cellular systems the mobile communication device 107 may search for and measure on.

The network 100 may further transmit information regarding a gap pattern (idle frame pattern). For example, the gap pattern may comprise a plurality of data frames D and a plurality of idle frames I. Each of the plurality of data frames D may, for example, comprise data, e.g. from another mobile communication device, transmitted via the first LTE cell 101A to the mobile communication device 107. Alternatively or additionally, the data frames D may comprise information used by e.g. the mobile communication device 107 for inter-frequency cell search and measurement.

The plurality of idle frames I may, for example, intervene the plurality of data frames D. For example, a data frame in the plurality of data frames D may be preceded and succeeded by an idle frame I. In an example, a duration of a data frame D and an idle frame I may be 40 ms of which 40 ms the idle frame I duration may be 6 ms.

An idle frame may, for example, be a period of time where the mobile communication device 107 is not scheduled to receive data and hence the mobile communication device 107 may search for and/or measure on a number of cellular systems within an idle frame. Another mobile communication device, for example another mobile communication device not having triggered IF/IRAT cell search and measurement, may e.g. receive data during the idle frames.

Thus, during an idle frame, the mobile communication device 107 may search for and/or measure on a cellular system to which the idle frame has been allocated.

A control unit 504, e.g. contained in the mobile communication device 107, may classify the cellular systems G1, G2, G3, W, L, in the list into groups. For example, the control unit 504 may be adapted to classify the cellular systems G1, G2, G3, W, L, into four groups according to:
A) Cellular systems requiring an entire gap and a specific periodic gap pattern;
B) cellular systems requiring entire gaps;
C) cellular systems requiring a subset of a gap and a specific timing in the gap; and
D) cellular systems requiring a subset of a gap.

The control unit 504 may classify the GSM cellular systems G1, G2 and G3 into a first group A) because each GSM cellular system requires an entire gap with a periodic gap pattern for search and measurement before a Basic Station Identity Code (BSIC) is determined for the respective GSM cellular systems. The first grouping may, for example, be performed by the control unit 504 prior to any measurement on the cellular systems G1, G2, G3, W, L, by the mobile communication device 107.

Additionally or alternatively, the control unit 504 may classify the WCDMA W and/or the LTE L cellular systems into a second group B) because both these cellular systems require an entire gap for search and measure, however, periodicity in the search and measurement on these cellular systems is not required. The first grouping may, for example, be performed prior to any measurement on the cells G1, G2, G3, W, L, by the mobile communication device 107,

The mobile communication device 107 may determine a periodicity. The periodicity may, for example, be determined after the first and/or second grouping of the cellular systems G1, G2, G3, W, L, in the list. Alternatively, the periodicity may, for example, be determined in connection with the first and/or second grouping of the cellular systems G1, G2, G3, W, L, in the list. Alternatively, the periodicity may, for example, be determined after reception by the mobile communication device 107 of the list containing cellular systems from the network 100.

The periodicity may, for example, be determined if at least one cellular system requiring a periodic pattern, e.g. G1 and/or G2 and/or G3, is contained in the list received by the mobile communication device 107 from the network 100.

A search for a BSIC of a GSM cellular system G1, G2, G3, may, for example, be performed every n * 120 ms, where n is a positive integer.

In the example where the list received by the mobile communication device 107 from the network 100 comprises three GSM cellular systems, G1, G2, G3, and one WCDMA cellular system W and one LTE cellular system L, the periodicity may be determined to be M = 6 idle frames because prior to any measurement on the five cellular systems in the list, each of the five cellular systems in the list requires an entire idle frame to be searched for and measured on. If the duration of a data frame D and an idle frame I is 40 ms and since each of the three GSM cellular systems require a periodicity in the search and/or measurement of n * 120 ms, then n may be determined to be 2 in this example and thus the periodicity M may be determined to be equal to 240ms/40ms = 6.

Alternatively, the periodicity may, for example, be determined as M = N +1, if N uneven and M = N otherwise, where N may be the number of cellular systems in the list received by the mobile communication device 107 from the network 100.

The mobile communication device 107 may allocate a respective one (or part of one) of the idle frames within a first period of periodicity M = 6 to each of the cellular systems G1, G2, G3, W, L, as for example illustrated in figure 2A) depending on the group requirement of the cellular systems. For example, in the case where all five cellular systems require an entire frame to be searched and measured on i.e. are of group A) and/or group B), then a respective one of the idle frames within a first period of periodicity M = 6 may be allocated to each of the cellular systems G1, G2, G3, W, L. If, for example, one or more of the cellular systems are of group C) and/or group D) i.e. do not require an entire frame, then a part of an idle frame within a first period of periodicity M = 6 may be allocated to each of the cellular systems G1, G2, G3, W, L

For example, the mobile communication device 107 may allocate a first idle frame in the first period to search for and measure on the first GSM cellular system (group A) G1 (A) in the list received from the network 100.

Similarly, the mobile communication device 107 may allocate a second and third idle frame in the first period to search for and measure on the second and third GSM cellular systems (both group A) G2 (A) and G3 (A), respectively, in the list received from the network 100.

The mobile communication device 107 may further allocate a fourth idle frame in the first period to search for and measure on the first WCDMA cellular system (group B) W (B) in the list received from the network 100.

The mobile communication device 107 may further allocate a fifth idle frame in the first period to search for and measure on the second LTE cellular system (group B) L (B) in the list received from the network 100.

In the example, the periodicity has been determined to be M = 6 and the number of cellular systems to be searched for and measured on is determined to be equal to 5 (G1, G2, G3, W, L). Thus, there is a last idle frame, i.e. a sixth idle frame in the first period, which last idle frame is not allocated for searching and measurement of cellular systems.

The last idle frame in the first period may, for example, be allocated by the mobile communication device 107 to discontinuous reception DRX in order to conserve battery of the mobile communication device 107.

Additionally, if one of the cellular systems G1, G2, G3, W, L had been group C) or group D), i.e. requiring a part of an idle frame for search and measurement, then the remaining part of the idle frame not used for search and measurement of the group C) or D) cellular system could also have been allocated DRX by the mobile communication device.

Alternatively, the last idle frame in the first period may, for example, be allocated to LTE or WCDMA cellular system search and measurement in order to improve the search and measurement performance of the mobile communication device 107.

If, during searching and measuring on a GSM cellular system 106, a BSIC is determined, e.g. from a GSM cell 103A in the GSM cellular system, then the mobile communication device may rely on Received Signal Strength Indication (RSSI) measurement for that GSM cellular system 106. RSSI measurements may be performed without periodicity requirements. Further, RSSI measurements may be performed using one time slot of GSM data i.e. 148 symbols equalling approximately 0.5ms of data transfer. Thus, if BSIC is determined for a GSM cell 103A, 103B, 109 in a GSM cellular system 106, then a subset of an idle frame may be required to perform RSSI measurements. Thereby, GSM cellular systems for which BSIC is know may be re-classified from group A) into group D).

If, during searching and measuring on an LTE cellular system 106, e.g. an LTE TDD cellular system, an LTE cell timing is determined, then the timing for all LTE TDD cells of the LTE TDD cellular system may be known, e.g. within 1 - 100ps, and therefore a subset of an idle frame may be required to perform cell search and signal power measurement in the LTE TDD cellular system. Exact timing within an idle frame may be required to perform the cell search and signal power measurement. For example, 2 - 3ms of data (e.g. downlink) may be required in order to obtain the cell search and signal power measurement. Thus, once the LTE TDD cell timing is determined, LTE cellular systems may be re-classified from group B) into group C).

In the example of figure 2 B) e.g. a second period, the mobile communication device 107 has determined BSIC for GSM cellular systems G2 and G3, respectively, and LTE TDD timing for the LTE cellular system L. Thereby, the GSM cellular systems G2 and G3 may be re-classified from group A) into group D) and the LTE cellular system L may be re-classified from group B) into group C).

Thereby, the RSSI measurements on the GSM cellular systems G2 and G3 may be performed in the same idle frame as the LTE TDD measurement of the LTE cellular system and thus, the mobile communication device 107 may perform the RSSI measurements and the LTE TDD measurement in the same idle frame e.g. the idle frame used for searching and measuring on the LTE cellular system in figure 2 A).

The requirement of performing the LTE TDD measurement at an exact timing may be ensured by the mobile communication device by, for example, placing the LTE TDD measurement in the second half of the LTE idle frame.

Thereby is achieved that the mobile communication device 107 may, for example as illustrated in figure 2 B), allocate the first idle frame in a second period to search for and measure on the first GSM cellular system G1 (A) in the list received from the network 100.

The mobile communication device 107 may further allocate a fourth idle frame in the second period to search for and measure on the first WCDMA cellular system W (B) in the list received from the network 100.

Alternatively, for example, the mobile communication device 107 may allocate a second (or a third idle frame), marked DRX in figure 2 B), in the second period to search for and measure on the first WCDMA cellular system W (B) in the list received from the network 100. Thereby is achieved that the mobile communication device 107 may search for and measure on the first GSM cellular system G1 (A) with a periodicity of M = 3 instead of M = 6 i.e. every 120ms instead of every 240ms because the fourth idle frame is no longer occupied by searching for and measuring on the first WCDMA cellular system W (B).

The mobile communication device 107 may further, for example, allocate a second part of a fifth idle frame in the second period to perform RSSI measurements on the second GSM cellular system G2, allocate a third part of the fifth idle frame in the second period to perform RSSI measurements on the third GSM cellular system G3, and allocate a fourth part of the fifth idle frame in the second period to perform LTE TDD measurements on the second LTE cellular system L. The fourth part of the fifth idle frame may, for example, be in a last part of the fifth idle frame e.g. more than 2ms into the fifth idle frame.

Further, the mobile communication device may allocate the second, third and sixth idle frames in the second period to discontinuous reception DRX in order to conserve battery of the mobile communication device 107. Alternatively, the mobile communication device may allocate the second, third and sixth idle frames in the second period to LTE or WCDMA cellular system search and measurement in order to improve the search and measurement performance of the mobile communication device 107. Alternatively, the mobile communication device may allocate a first part of the second, third and sixth idle frames in the second period to DRX and a second part of the second, third and sixth idle frames in the second period to LTE or WCDMA cellular system search and measurement. For example, the second and third idle frames may be allocated to DRX and the sixth idle frame may be allocated to LTE or WCDMA cellular system search and measurement.

Additionally, if a remaining part of the fifth idle frame exist, which remaining part is not used for searching and measuring on the second and third GSM cellular systems and the LTE cellular system, then the remaining part of the fifth idle frame may be used for DRX or searching and measuring of cellular systems.

If a BSIC is determined for the first GSM cellular system G1, as for example illustrated in figure 2 C) e.g. a third period, then the first GSM cellular system G1 may be re-classified from group A) to group D).

Thereby is achieved that the mobile communication device 107 may, for example as illustrated in figure 2 C), allocate the fourth idle frame in a third period to search for and measure on the WCDMA cellular system W (B) in the list received from the network 100.

The mobile communication device 107 may further, for example, allocate first part of a fifth idle frame in the third period to perform RSSI measurements on the first GSM cellular system G1, a second part of the fifth idle frame in the third period to perform RSSI measurements on the second GSM cellular system G2, allocate a third part of the fifth idle frame in the third period to perform RSSI measurements on the third GSM cellular system G3, and allocate a fourth part of the fifth idle frame in the third period to perform LTE TDD measurements on the second LTE cellular system L.

Further, the mobile communication device may allocate the first, second, third and sixth idle frames in the third period to discontinuous reception DRX in order to conserve battery of the mobile communication device 107. Alternatively, the mobile communication device may allocate the first, second, third and sixth idle frames in the third period to LTE or WCDMA cellular system search and measurement in order to improve the search and measurement performance of the mobile communication device 107.

Alternatively, the mobile communication device may allocate a first part of the first, second, third and sixth idle frames in the third period to DRX and a second part of the first, second, third and sixth idle frames in the third period to LTE or WCDMA cellular system search and measurement. For example, the first and second idle frames may be allocated to DRX and the third idle frame may be allocated to LTE cellular system search and measurement and the sixth idle frame may be allocated to WCDMA cellular system search and measurement.

Additionally, if a remaining part of the fifth idle frame exist, which part is not used for searching and measuring on the first and second and third GSM cellular systems and the LTE cellular system, then the remaining part of the fifth idle frame may be used for DRX or searching and measuring of cellular systems.

In an embodiment, the mobile communication device comprises means for determining, e.g. the control unit 504, which means for determining may determine whether a number of unused and/or partly used idle frames should be used for DRX or search performance enhancement or both.

The t-axis may be a time axis.

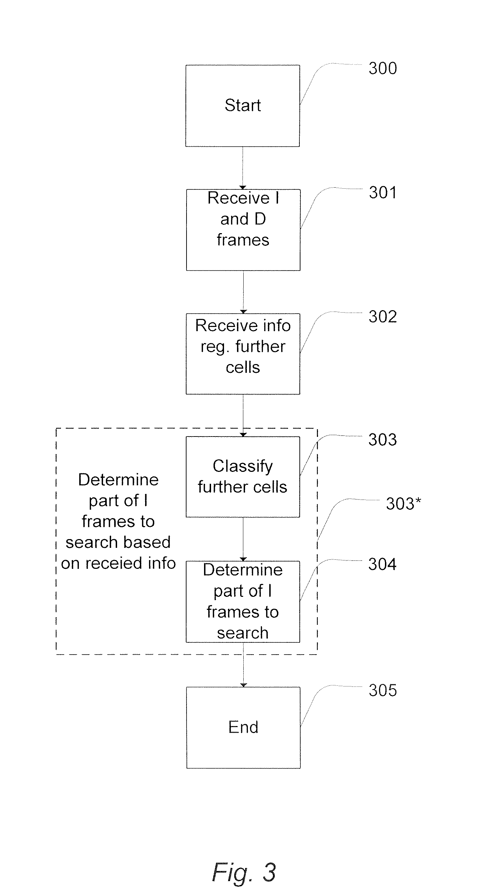

Figure 3 shows a flowchart of an embodiment of a method of searching and/or measuring on cells in a mobile communication device 107 connected to a first cell 101A in a network 100. The cells to be searched and/or measured may, for example, be contained in a number of cellular systems 102, 105, 106.

The method starts in step 300.

In step 301, the mobile communication device 107 receives a number of data-frames D and a plurality of idle frames I from the network 100. The data-frames and the idle frames may, for example, be transmitted from the network to the mobile communication device 107 via said first cell 101A. In an embodiment, the number of data-frames D and the plurality of idle frames I are received from the network if, for example, the mobile communication device triggers IF/IRAT measurements. The idle frames may be used for cell search and measurement. As seen in figure 2, the plurality of idle frames may intervene the number of data-frames.

In step 302, the mobile communication device receives information from said network 100, e.g. via said first cell 101A, regarding at least one further cell 101 B, 103A, 103B, 104, 105, 109 in said network 100. In an embodiment, the information regarding at least one further cell is received from the network 100 if, for example, the mobile communication device triggers IF/IRAT measurements. The information may, for example, comprise cells and cell types in proximity to the mobile communication device e.g. within approximately a radius of 2000m of the mobile communication device. Alternatively, the radius may be smaller e.g. approximately 1000m. Alternatively, the radius may be larger e.g. approximately 4000m. Approximately may in this context mean, for example, ± 10% e.g. a radius of 2000m ± 10%.

In step 303, the mobile communication device 107 classifies said at least one further cell 101B, 103A, 103B, 104, 105, 109 into a first group comprising at least one first group requirement being correlated to said information. For example, the mobile communication device may classify the at least one further cell into a first group depending on the type (RAT) of the at least one further cell and on how the mobile communication device 107 may measure on the at least one further cell. The at least one group requirement may, for example, be that the first group requires periodic measurement or a specific timing or the like.

In step 304, the mobile communication device 107, based on the at least one first group requirement, determines for each of the at least one further cell a first part of at least one of said idle frames to search and/or measure on said at least one further cell. For example, the mobile communication device 107 may allocate a respective one (or part of one) of the idle frames within a first period of a given periodicity M to each of the cells received from the network 100. For example, the mobile communication device 107 may allocate a first part of the idle frames in the first period to search for and measure on cells belonging to a first group e.g. group A) cells; a second part of the idle frames in the first period to search and measure on cells belonging to a second group, etc. The mobile communication device 107 may further, for example, based on the group requirements of the respective at least one further cell allocate a part of an idle frame to each of the at least one further cell. For example, a group A) type cell may be allocated an entire idle frame for search and measurement. A type D) cell may be allocated a part, e.g. proper subset, of an idle frame such as, for example, 25% of an idle frame.

In an embodiment, the method of figure 3 may, alternative to steps 303 and 304, comprise a step 303* in which, the mobile communication device, based on the received information from the network 100, determines for each of the at least one further cell a first part of at least one of said idle frames to search and/or measure on said at least one further cell. Thus, for example, based on information received from the network, e.g. cell type information such as GSM, LTE, WCDMA, etc., the mobile communication device 107 may allocate one of the idle frames within a first period of a given periodicity M to each of the cells received from the network 100. For example, the mobile communication device 107 may allocate a first part of the idle frames in the first period to search for and measure on cells belonging to a first group e.g. group A) cells; a second part of the idle frames in the first period to search and measure on cells belonging to a second group, etc. The mobile communication device 107 may further, for example, based on the e.g. cell type information of the respective at least one further cell allocate a part of an idle frame to each of the at least one further cell. For example, a group A) type cell may be allocated an entire idle frame for search and measurement. A type D) cell may be allocated a proper subset of an idle frame such as, for example, 25% of an idle frame.

In an embodiment, the method of figure 3 may additionally comprise a step of determining a period (M). For example, the mobile communication device 107 may be determined if at least one cell requiring a periodic pattern, e.g. G1 and/or G2 and/or G3, is contained in the cells received by the mobile communication device 107 from the network 100.

The mobile communication device 107 may, for example, determine the periodicity as M = N +1, if N uneven and M = N otherwise, where N may be the number of cells received by the mobile communication device 107 from the network 100.

The method of figure 3 ends in step 305.

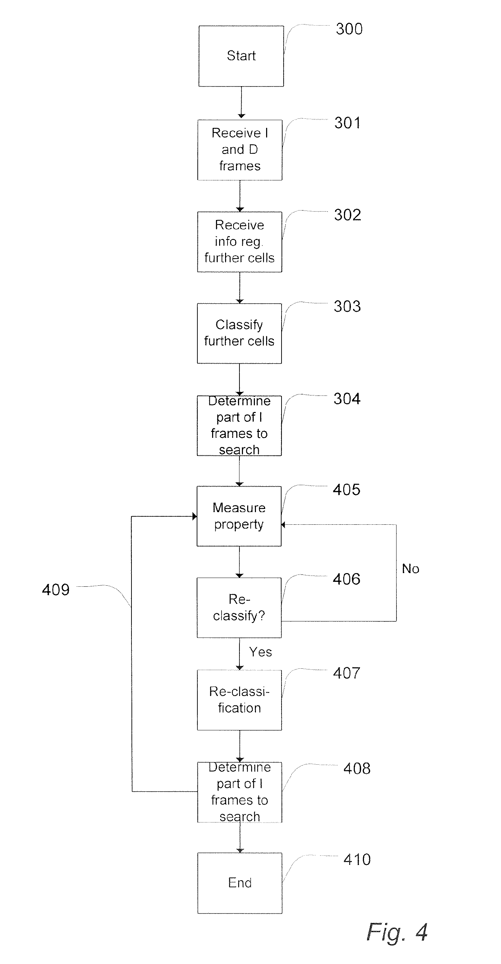

Figure 4 shows a flowchart of an embodiment of a method of searching and/or measuring on cells in a mobile communication device 107 connected to a first cell 101A in a network 100. The cells to be searched and/or measured may, for example, be contained in a number of cellular systems 102, 105, 106.

The method starts in step 300. Steps 301 - 304 are identical to steps 301 - 304 of figure 3.

In step 405, the mobile communication device may measure at least one property of the at least one further cell 101 B, 103A, 103B, 104, 105, 109. The at least one property may, for example, be a BSIC of a GSM cell and/or a LTE TDD cell timing. The at least one property may, for example, be measured by, for example, a synchronized signal determination and/or pilot symbols.

In step 406, the mobile communication device 107 determines, based on said at least one property, whether said at least one further cell 101 B, 103A, 103B, 104, 105, 109 requires a re-classification. If no property was measured, the method may return to step 405. For example, if a BSIC of a GSM cell is determined by the mobile communication device 107, then the mobile communication device 107 may determine that the GSM cell requires a re-classification.

For each of the at least one further cell requiring a reclassification, the mobile communication device 107 may:
In step 407, re-classify said at least one further cell 101 B, 103A, 103B, 104, 105, 109 into a second group based on said at least one property, wherein said second group comprises at least one second group requirement being correlated to said at least one property. For example, a GSM cell for which the mobile communication device 107 has determined a BSIC, may be re-classified from a group A) type cell to a group D) type cell. A group requirement of group D) may, for example, be that a cell search and/or measurement may be performed in a part of an idle frame.
In step 408, based on the re-classification in step 407, the mobile communication device 107 may determine for each of the at least one further cell a second part of at least one of said idle frames to search and/or measure on said at least one further cell. For example, for each of the re-classified cells in step 407, the mobile communication device may allocate a proper subset of an idle frame to a type D) cell, e.g. 25% of the idle frame. Additionally, the mobile communication device 107 may allocate more than one cell, for example, cells of type C) and/or D) to one idle frame thereby reducing the requirement for idle frames allocated to searching and measuring on cells. Additionally, the mobile communication device 107 may allocate released idle frames, i.e. idle frames within a period allocated to a cell before the re-classification of step 407, but without cells allocated to them after the re-classification, to e.g. DRX and/or improved cell search and measurement performance (e.g. by using more than one idle frame to search and measure a single cell).
In step 409 i.e. after step 408, the method may return to step 405. For example, the method may after step 408 return to step 405 until a handover from the first cell to another cell is triggered and the handover is initiated between the mobile communication device and the other cell.

The method may end in step 410. For example, the method may end in step 410 if a handover of the mobile communication device 107 is initiated from the first cell to another cell.

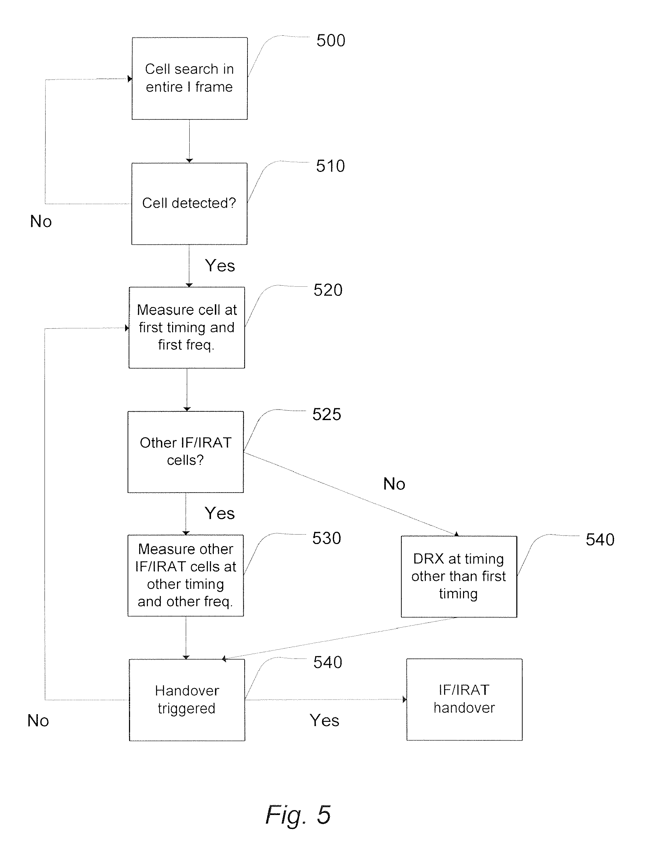

Figure 5 shows a flowchart of an embodiment of a method of performing IF/IRAT search and measurements on LTE TDD or synchronized LTE FDD cellular systems, however, the idea may be applicable to other TDD or synchronized FDD systems as well. LTE utilize reuse 1 i.e. all cells in a cellular system uses the same carrier frequency. For efficient utilization of capacity in TDD systems, the cells of the cellular system may be synchronized i.e. all cells may transmit download DL slots and upload UL slots at the same time. Hence, once the timing is known for a first TDD cell of a cellular system i.e. of a certain carrier frequency, then the timing (within for example 1 - 100ps) of all other cells in the cellular system may be known to the mobile communication device 107.

In figure 5, the mobile communication device 107 indicates to the network that IF/IRAT measurements are required. An indication may, for example, be triggered when the mobile communication device's signal strength on a first cell, e.g. a first LTE cell 101A or a first WCDMA cell 105 or a first GSM cell 103A, is below a certain threshold and no stronger intra-frequency cells exists thus indicating that the mobile communication device is going out of coverage on the cellular system 102, 105, 106 of the first cell 101A, 103A, 105.

Subsequently, the mobile communication device may receive a neighbouring cell list, for example comprising which cellular systems (RATs) and their carrier frequencies to search on. Additionally, the mobile communication device 107 may receive a gap pattern comprising a number of data frames and a number of intervening idle frames.

For each IF/IRAT gap allocated to a certain carrier frequency fa, with cells operating using TDD, the mobile communication device 107 may start to do cell search using the entire IF/IRAT gap 500. Typically, the mobile communication device 107 does not know a timing for the cells on the carrier frequency in the start of a search and thus the mobile communication device may utilize the entire gap for the cell search. Each time an IF/IRAT gap is allocated to the carrier frequency fa and no cell is detected, the search is done during the entire lF/IRAT gap i.e. "no path" of 510.

Once a second cell is detected, "yes path" of 510, i.e. a timing (t) of the second cell is determined and the mobile communication device 107 automatically knows the timing for all other cells on the carrier frequency fa.

Thus, the mobile communication device 107 does not need the entire gap for search for other cells and measurements on already detected cells.

Typically, a time interval [t-b,t+c] of an idle frame, for example in the order of 1 - 2ms in LTE TDD, may be required for a timed cell. Then next time measurements are needed on a cell at carrier frequency fa, the mobile communication device only utilize the time interval (t-b,t+c) for measuring the second cell at carrier frequency fa 520.

If other IF/IRAT cells are required to be measured on, and the other IF/IRAT measurements can be made within a time interval outside the [t-b,t+c]-interval, e.g. GSM RSSI measurements, then "yes path" of 525 is chosen and the terminal uses the remaining time of the idle frame for such other IF/IRAT measurements 530. Otherwise the terminal can use the remaining time of the idle frame for DRX and thereby saving power 535.

If a hand over is triggered 540 "Yes", then the terminal and network initiates an IF/IRAT handover 550. Otherwise 540 "No", the measurement procedure continues at 520.

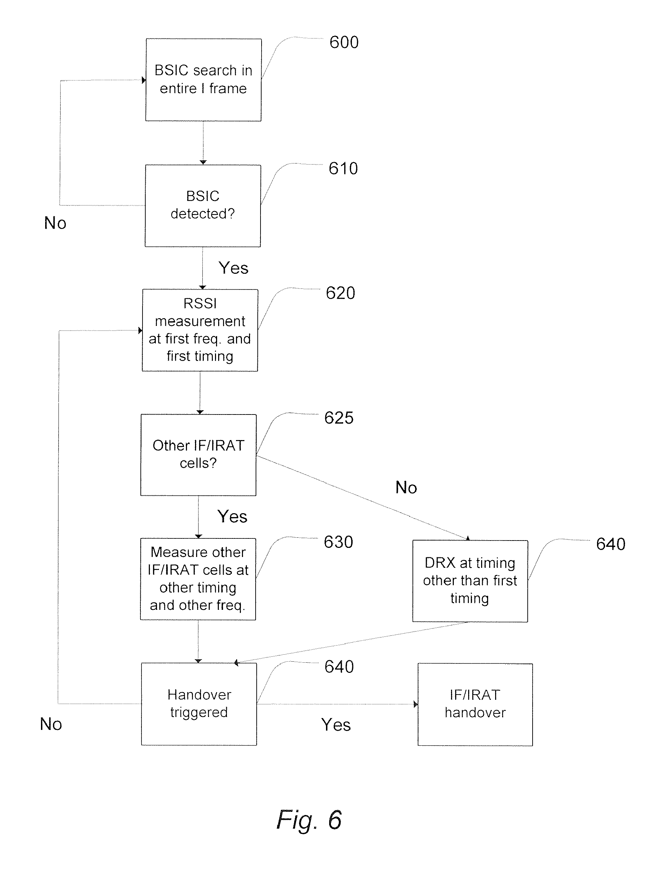

Figure 6 shows a flowchart of an embodiment of a method of performing IF/IRAT search and measurements on GSM cellular systems. In a GSM cellular system, a search over time may result in a determination of a BSIC of the GSM cellular system.

When a BSIC is determined for a GSM cellular system operating at a carrier frequency of fb, then the mobile communication device is only required to subsequently perform RSSI measurements

In figure 6, the mobile communication device indicates to the network that IF/IRAT measurements are required. An indication may, for example, be triggered when the mobile communication device's signal strength on a first cell, e.g. a first GSM cell 103A or a first LTE cell 101A or a first WCDMA cell 105, is below a certain threshold and no stronger intra-frequency cells exists thus indicating that the mobile communication device is going out of coverage on the cellular system 102, 105, 106 of the first cell 101A, 103A, 105.

Subsequently, the mobile communication device may receive a neighbouring cell list, for example comprising which cellular systems (RATs) and their carrier frequencies to search on. Additionally, the mobile communication device 107 may receive a gap pattern comprising a number of data frames and a number of intervening idle frames.

For each IF/IRAT gap allocated to a GSM cellular system operating at a certain carrier frequency fb, the mobile communication device 107 may start to do BSIC cell search using the entire IF/IRAT gap 600. Typically, the mobile communication device 107 does not know a timing for the cells on the carrier frequency in the start of a search and thus the mobile communication device may utilize the entire gap for BSIC search. Each time an IF/IRAT gap is allocated to the carrier frequency fb and no cell is detected, the search is done during the entire IF/IRAT gap i.e. "no path" of 610.

Once a BSIC of a cell is detected, "yes path" of 610, i.e. a timing (t) of the second cell is determined then the mobile communication device 107 only needs a part of the idle frame for RSSI measurements and the part not being dependent on the timing t.

The next time measurements are required on a cell at carrier frequency fb, the mobile communication device 107 only needs a part (e.g. time interval [d, e]) of the entire idle frame for searching and measuring at carrier frequency fb 620.

If other IF/IRAT cells are required to be measured on, and the other IF/IRAT measurements can be made within a time interval outside the [d, e]-interval, e.g. GSM RSSI measurements and/or LTE TDD systems with timing outside [d, e], then "yes path" of 625 is chosen and the terminal uses the remaining time of the idle frame for such other IF/IRAT measurements 630. Otherwise the terminal can use the remaining time of the idle frame for DRX and thereby saving power 635.

If a hand over is triggered 640 "Yes", then the terminal and network initiates an IRAT/IF handover 650. Otherwise 640 "No", the measurement procedure continues at 620.

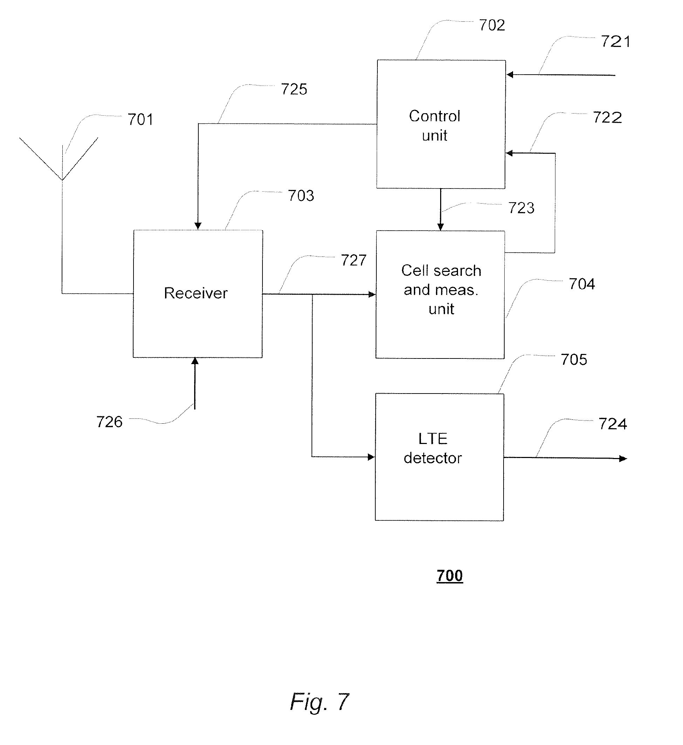

Figure 7 shows a device 700 according to an embodiment. The device 700 may, for example, be part of a mobile communication device 107.

The device 700 may comprise an antenna 701. For example, the device 700 may be connected to an antenna 701 of a mobile communication device 107. The antenna 701 may receive data from the network 100 via a first cell 1 01A, 103A, 105. The data may comprise information about data-frames D and idle frames I and the number and types of cells proximal to the device 700. For example, the information may comprise cell ID and/or cellular system frequencies and/or bandwidth of the cellular system. The data may, for example, be transmitted as higher layer data from the network to the mobile communication device 107 via the antenna 701. The mobile communication device 107 may decode the higher layer data and transmit 721 the information regarding data-frames, idle frames, and number and types of cells to a control unit 702 of the device 700.

The control unit 702 may, for example, determine which idle frames I to be allocated to which cellular system's frequencies and bandwidth. The allocation may, for example, be performed as disclosed above under figure 2 - 4. The allocation of idle frames may be performed continuously or periodically e.g. every 20ms or e.g. as in the above example of figure 2 every 120ms.

During a given idle frame, the control unit 702 may determine 725, for example, bandwidth and frequency of a cellular system allocated to the given idle frame which a receiver circuit 703 is subsequently adapted to receive. For example, the receiver circuit 703 may be tuned to the frequency determined by the control unit 702 on basis of the given idle frame. Additionally, the control unit 702 may transmit 726 the gap pattern to the receiver circuit 703.

Additionally, the control unit 702 may transmit 723 information regarding the cellular system of the given idle frame to a cell search and measurement unit 704. The information may, for example, comprise bandwidth and frequency of the cellular system allocated to the given idle frame.

The receiver circuit 703 may transmit data 727 of the given idle frame from the antenna 701 in the bandwidth and frequency determined by the control unit 702 to the cell search and measuring unit. Additionally, the receiver circuit 703 may transmit data contained in data frames from the antenna to a unit dedicated to the specific cellular system 705, e.g. an LTE detector.

The cell search and measurement unit 704 may perform cell search and measurement procedures on the data received from the receiver circuit 703 and the control unit 702 in order to, for example, detect a number of cells and determine the signal strength of the detected number of cells.

The search and measurement procedures may include, for example, primary and secondary synchronization signal determination to determine a cell timing (e.g. to perform a LTE cell search) and/or BSIC determination (e.g. to perform a GSM cell search) and/or pilot symbol/LTE downlink reference signal detection (e.g. to perform an LTE cell signal strength), etc.

The cell search and measurement unit 704 transmits information about the number of detected cells and their signal strength to the control unit 702. Based on the received information from the cell search and measurement unit 704, the control unit 702 may re-classify cells as disclosed above.

The LTE detector 705 may transmit 724 data contained in the data frames D to further processing e.g. in the mobile communication device 107.

In the above and/or the below, a cell in a cellular system may, for example, be a cell site base station fitted with one or more microwave antennas. A base station may be mounted on a tower, pole or building, and the base station may, for example, be located throughout populated areas. The base station may, for example, be connected to a cabled communication network and switching system.

In one aspect, a part of an idle frame may, for example, comprise the entire idle frame or the part of an idle frame may, for example, comprise a proper subset of the idle frame.

Although various embodiments of the present invention have been described and shown, the invention is not restricted thereto, but may also be embodied in other ways within the scope of the subject-matter defined in the following claims.

In general, any of the technical features and/or embodiments described above and/or below may be combined into one embodiment. Alternatively or additionally any of the technical features and/or embodiments described above and/or below may be in separate embodiments. Alternatively or additionally any of the technical features and/or embodiments described above and/or below may be combined with any number of other technical features and/or embodiments described above and/or below to yield any number of embodiments.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of searching and/or measuring on cells in a mobile communication device (107) connected to a first cell in a network (100), the method comprising
• receiving (301) a number of data-frames (D) and a plurality of idle frames (I) which can be used for cell search and/or measurement and wherein the plurality of idle frames intervenes the number of data-frames;
• receiving (302) information regarding at least one further cell (103A, 103B, 104, 105,109) in said network (100); and
• based on the received information, determining (303*) for each of the at least one further cell a first part of at least one of said idle frames to search and/or measure on said at least one further cell.

2. A method according to claim 1, wherein the method further comprises classifying (303) said at least one further cell (103A, 103B, 104, 105,109) into a first group comprising at least one first group requirement being correlated to said information.

3. A method according to claim 2, wherein the method further comprises
• measuring (405) at least one property of the at least one further cell (103A, 103B, 104, 105,109);
• determining (406), based on said at least one property, if said at least one further cell (103A, 103B, 104, 105,109) requires a re-classification; and
• for each of the at least one further cells requiring a reclassification;
• Re-classifying (407) said at least one further cell (103A, 103B, 104, 105,109) into a second group based on said at least one property, wherein said second group comprises at least one second group requirement being correlated to said at least one property; and
• based on the re-classification, determining (408) for each of the at least one further cell a second part of at least one of said idle frames to search and/or measure on said at least one further cell.

4. A method according to claim 2, wherein classifying (303) said at least one further cell (103A, 103B, 104, 105,109) into a first group further comprises determining a period (M) of the plurality of idle frames.

5. A method according to claim 4, wherein the first part is determined periodically with the period (M).

6. A method according to claim 3, wherein the method further comprises repeating (409) the measuring and the re-classifying and the determining for each of the at least one further cell until the mobile communication device is handed over to one of the at least one further cell (103A, 103B, 104, 105,109).

7. A method according to anyone of claims 1 to 6, wherein the mobile communication device (107) is adapted to power down during a third part (DRX) of the idle frames (I) being equal to the complement to a union of said first and second parts of the idle frames (I).

8. A method according to anyone of claims 1 to 7, wherein said first group requirement is different from said second group requirement.

9. A method according to claim 3, wherein the first and/or the second group requirements are chosen from
• a cell requiring an entire idle frame and a specific period (M) of the plurality of idle frames;
• a cell requiring an entire idle frame;
• a cell requiring a subset of an idle frame and a specific timing within the idle frame; or
• a cell requiring a subset of an idle frame.

10. A device for searching and/or measuring on cells in a mobile communication device (107) connected to a first cell in a network (100), the device comprising
• a receiver (703) for receiving (301) a number of data-frames (D) and a plurality of idle frames (I) which can be used for cell search and/or measurement and wherein the plurality of idle frames intervenes the number of data-frames; and for receiving (302) information regarding at least one further cell (103A, 103B, 104, 105,109) in said network **(**100); and
• a control unit (702) for, based on the received information, determining (303*) for each of the at least one further cell a first part of at least one of said idle frames to search and/or measure on said at least one further cell.

11. A device according to claim 10, wherein the device further comprises a control unit (702) for classifying (303) said at least one further cell (103A, 103B, 104, 105,109) into a first group comprising at least one first group requirement being correlated to said information.

12. A device according to claim 11, wherein the device further comprises
• cell search and measuring unit (704) for measuring (405) at least one property of the at least one further cell (103A, 103B, 104, 105,109); and for determining (406), based on said at least one property, if said at least one further cell (103A, 103B, 104, 105,109) requires a re-classification; and
• a control unit (702) for, for each of the at least one further cells requiring a reclassification, re-classifying (407) said at least one further cell (103A, 103B, 104, 105,109) into a second group based on said at least one property, wherein said second group comprises at least one second group requirement being correlated to said at least one property; and for, based on the re-classification, determining (408) for each of the at least one further cell a second part of at least one of said idle frames to search and/or measure on said at least one further cell.

13. A device according to claim 11, wherein the control unit (702) for classifying (303) said at least one further cell (103A, 103B, 104, 105,109) into a first group further is further adapted for determining a period (M) of the plurality of idle frames.

14. A device according to claim 13, wherein the device is adapted to determine the first part periodically with the period (M).

15. A device according to claim 12, wherein the control unit (702) is further adapted for repeating (409) the measuring and the re-classifying and the determining for each of the at least one further cell until the mobile communication device is handed over to one of the at least one further cell (103A, 103B, 104, 105,109).

16. A device according to anyone of claims 10 to 15, wherein the control unit (702) is further adapted to power down the mobile communication device (107) during a third part (DRX) of the idle frames (I) being equal to the complement to a union of said first and second parts of the idle frames (I).

17. A system for handing over a mobile communication device from a first cell to another cell, wherein the system comprises a device according to anyone of claims 10 to 16 and a first cell and another cell.
